# EUROPEAN PATENT SPECIFICATION

(11) **EP 3 589 253 B1**
(45) Date of publication and mention of the grant of the patent: **03.05.2023**
(21) Application number: 18760505.0
(22) Date of filing: 01.03.2018
(51) Int. Cl.: A61G 5/00, A61G 5/04, B62D 61/02, B60G 11/00, A61G 5/10

(54) **MOTOR-DRIVEN CHAIR STEERED BY SEAT ROTATION**
DURCH SITZROTATION GESTEUERTER MOTORISCH ANGETRIEBENER STUHL
CHAISE MOTORISÉE DIRIGÉ PAR ROTATION DE SIÈGE

(30) Priority: 02.03.2017 US 201715447146
(43) Date of publication of application: 08.01.2020
(73) Proprietor: Travelsys4u Ltd., 4730202 Ramat Hasharon (IL)
(72) Inventor: OMER, Galin, 4730202 Ramat Hasharon (IL); DOLEV, Eyal, Ann Arbor, Michigan 48103 (US); NAGLER, Ehud, 36054 Kiryat Tivon (IL); SHULSHTEIN, Sharon, 1934000 Kibbutz Gazit (IL); NIR, Amit, 3701433 Pardes Hana (IL); AVITAL, Shlomi, 3701433 Pardes Hana (IL); COHEN, Shay, 4723116 Ramat Hasharon (IL)
(74) Representative: Kancelaria Eupatent.pl Sp. z.o.o
(86) International application number: PCT/IL2018/050232
(87) International publication number: WO 2018/158772

(56) References cited:
- AT-B- 384 734
- CN-U- 201 510 443
- US-A- 3 938 608
- US-B1- 6 341 657

## Description

### FIELD AND BACKGROUND OF THE INVENTION

The present invention relates to mobility aids and, in particular, it concerns a motor-driven chair that is steered by rotation of the seat. It is known to provide a wide range of mobility aids for individuals having various levels of limitations. Of particular relevance to the present invention is a category of mobility aids referred to herein as seat-steered motorized chairs, as exemplified by US patent nos. 5,183,133, 3,938,608 and publication CN201510443U. In such devices, a central drive wheel located beneath the seat is linked so as to be aligned with the facing direction of the seat. A user turns the direction of motion by rotating her seat relative to a surrounding stabilizing chassis so as to face towards the direction in which she wishes to move.

### SUMMARY OF THE INVENTION

The present invention is a motor-driven chair that is steered by rotation of the seat as defined by the appended claims.

According to the teachings of an embodiment of the present invention there is provided, a motor-driven chair for propelling a user over an underlying surface, the chair comprising: (a) a seat element having support surfaces for supporting the user sitting in a seat-facing direction; (b) a seat pole extending downwards from the seat element for supporting the seat element, the seat pole defining a vertical axis; (c) a drive wheel rotatable about a horizontal axis of rotation so as to define a direction of forward motion perpendicular to the axis of rotation, the drive wheel being located beneath the seat element substantially on the vertical axis, the drive wheel being mechanically linked to the seat pole so as to maintain the direction of forward motion aligned with the seat-facing direction so that rotation of the seat element about the vertical axis causes a corresponding rotation of the direction of forward motion; (d) a motor in driving connection to the drive wheel so as to drive the drive wheel to rotate about the horizontal axis of rotation, and thereby propel the chair in the seat-facing direction; (e) a stabilizer assembly mechanically linked to the seat pole, the stabilizer assembly comprising a set of stabilizer wheels mounted on a support structure for supporting the seat pole in a vertical orientation, the stabilizer assembly allowing rotation of the seat pole about the vertical axis relative to the support structure; and (f) a suspension arrangement associated with the seat pole, the drive wheel and the stabilizer assembly, the suspension arrangement being configured to distribute a load of the user sitting stably on the seat element so as to maintain a predefined range of proportions between a load supported by the drive wheel and a load supported by the stabilizer wheels.

According to a further feature of an embodiment of the present invention, the suspension arrangement is configured to distribute a load of the user sitting stably on the seat element so that a substantially constant proportion of the user's weight is supported by the drive wheel and a remainder of the user's weight is supported by the stabilizer wheels for users of weight anywhere between 50 kg and 100 kg, the substantially constant proportion being between 30% and 90% of the user's weight.

According to an alternative embodiment of the present invention, the suspension arrangement comprises a first suspension spring deployed to transfer load between the seat pole and the drive wheel and a second suspension spring deployed to transfer load between the seat pole and the support structure.

According to an alternative embodiment of the present invention, the suspension arrangement comprises a first hydraulic arrangement comprising at least one piston, the first hydraulic arrangement being deployed to transfer load between the seat pole and the drive wheel, and a second hydraulic arrangement comprising at least one piston, the second hydraulic arrangement being deployed to transfer load between the seat pole and the support structure, wherein the first and second hydraulic arrangements are interconnected by a pressure-equalization line.

There is also provided according to the teachings of an embodiment of the present invention, a motor-driven chair for propelling a user over an underlying surface, the chair comprising: (a) a seat element having support surfaces for supporting the user sitting in a seat-facing direction; (b) a seat pole extending downwards from the seat element for supporting the seat element, the seat pole defining a vertical axis; (c) a drive wheel rotatable about a horizontal axis of rotation so as to define a direction of forward motion perpendicular to the axis of rotation, the drive wheel being located beneath the seat element substantially on the vertical axis, the drive wheel being mechanically linked to the seat pole so as to maintain the direction of forward motion aligned with the seat-facing direction so that rotation of the seat element about the vertical axis causes a corresponding rotation of the direction of forward motion; (d) a motor in driving connection to the drive wheel so as to drive the drive wheel to rotate about the horizontal axis of rotation, and thereby propel the chair in the seat-facing direction; (e) a stabilizer assembly mechanically linked to the seat pole, the stabilizer assembly comprising a set of stabilizer wheels mounted on a support structure for supporting the seat pole in a vertical orientation, the stabilizer assembly allowing rotation of the seat pole about the vertical axis relative to the support structure, wherein the set of stabilizer wheels comprises at least one fixed-axis follower wheel and at least one caster wheel mounted so as to swivel to accommodate turning of the chair.

According to a further feature of an embodiment of the present invention, the set of stabilizer wheels comprises at least two fixed-axis follower wheels and at least two caster wheels mounted so as to swivel to accommodate turning of the chair.

There is also provided according to the teachings of an embodiment of the present invention, a motor-driven chair for propelling a user over an underlying surface, the chair comprising: (a) a seat element having support surfaces for supporting the user sitting in a seat-facing direction; (b) a seat pole extending downwards from the seat element for supporting the seat element, the seat pole defining a vertical axis; (c) a drive wheel rotatable about a horizontal axis of rotation so as to define a direction of forward motion perpendicular to the axis of rotation, the drive wheel being located beneath the seat element substantially on the vertical axis, the drive wheel being mechanically linked to the seat pole so as to maintain the direction of forward motion aligned with the seat-facing direction so that rotation of the seat element about the vertical axis causes a corresponding rotation of the direction of forward motion; (d) a motor in driving connection to the drive wheel so as to drive the drive wheel to rotate about the horizontal axis of rotation, and thereby propel the chair in the seat-facing direction; (e) a stabilizer assembly mechanically linked to the seat pole, the stabilizer assembly comprising a set of stabilizer wheels mounted on a support structure for supporting the seat pole in a vertical orientation, the stabilizer assembly allowing rotation of the seat pole about the vertical axis relative to the support structure, wherein the support structure comprises a center portion mechanically linked to the seat pole, a front portion hingedly connected to the center portion at a first hinge axis and supporting two front wheels from the set of stabilizer wheels, and a rear portion hingedly connected to the center portion at a second hinge axis and supporting two rear wheels from the set of stabilizer wheels, wherein the first and second hinge axes are parallel axes.

According to a further feature of an embodiment of the present invention, the front wheels are caster wheels mounted to the front portion via folding wings foldable along a secondary hinge axis non-parallel to the first hinge axis, the support structure further comprising a linkage deployed to fold the wings from a deployed position to a folded position as the front portion is rotated about the first hinge.

There is also provided according to the teachings of an embodiment of the present invention, a motor-driven chair for propelling a user over an underlying surface, the chair comprising: (a) a seat element having support surfaces for supporting the user sitting in a seat-facing direction; (b) a seat pole extending downwards from the seat element for supporting the seat element, the seat pole defining a vertical axis; (c) a drive wheel rotatable about a horizontal axis of rotation so as to define a direction of forward motion perpendicular to the axis of rotation, the drive wheel being located beneath the seat element substantially on the vertical axis, the drive wheel being mechanically linked to the seat pole so as to maintain the direction of forward motion aligned with the seat-facing direction so that rotation of the seat element about the vertical axis causes a corresponding rotation of the direction of forward motion; (d) a motor in driving connection to the drive wheel so as to drive the drive wheel to rotate about the horizontal axis of rotation, and thereby propel the chair in the seat-facing direction; (e) a stabilizer assembly mechanically linked to the seat pole, the stabilizer assembly comprising a set of stabilizer wheels mounted on a support structure for supporting the seat pole in a vertical orientation, the stabilizer assembly allowing rotation of the seat pole about the vertical axis relative to the support structure; and (f) a height adjustment mechanism integrated with the seat pole and deployed to adjust a height of the seat element above the underlying surface between a lowered position for mounting and dismounting and a raised position for driving.

According to a further feature of an embodiment of the present invention, there is also provided a footrest mechanically linked to the height adjustment mechanism so as to move vertically with the seat element so as to be brought into contact with the underlying surface in the lowered position of the seat element and to be raised away from the underlying surface in the raised position of the seat element, the seat element being rotatable about the vertical axis independent of the footrest.

According to a further feature of an embodiment of the present invention, the stabilizer assembly is a foldable stabilizer assembly foldable from a deployed state for supporting the chair to a folded state for compact storage and transport, and wherein the footrest is mechanically linked to the stabilizer assembly so as to obstruct folding of the stabilizer assembly from the deployed state to the folded state when the footrest is in the raised position.

According to a further feature of an embodiment of the present invention, the footrest has foot support surface including a rear portion proximal to the seat element and a front portion projecting away from the seat element, the front portion and the rear portion being connected at a hinged connection so as to allow folding inwards of the front portion of the foot support surface.

According to a further feature of an embodiment of the present invention, the stabilizer assembly is a foldable stabilizer assembly foldable from a deployed state for supporting the chair to a folded state for compact storage and transport, the chair further comprising a fold-assist mechanism for assisting folding of the stabilizer assembly, the fold-assist mechanism comprising a spring-loaded actuator associated with the height-adjustment mechanism and deployed such that lowering of the seat element from the raised position to the lowered position brings the actuator into engagement with a part of the stabilizer assembly and applies loading to an internal spring of the actuator, the loading being released during at least part of a folding motion of the stabilizer assembly.

### BRIEF DESCRIPTION OF THE DRAWINGS

The invention is herein described, by way of example only, with reference to the accompanying drawings, wherein:
FIGS. 1A and 1B are isometric views of a motor-driven chair, constructed and operative according to an embodiment of the present invention;
FIG. 2A is a vertical cross-sectional view taken along a mid-plane of the motor-driven chair of FIG. 1A;
FIG. 2B is an enlarged view of the lower region of FIG. 2A;
FIGS. 3A-3D are a sequence of isometric views illustrating a sequence of operations for folding the motor-driven chair of FIG. 1A;
FIGS. 4A and 4B are enlarged views of the regions of FIGS. 3C and 3D marked by a circle, respectively;
FIG. 5 is a schematic top view showing a sequence of positions of the motor-driven chair of FIG. 1A during turning;
FIG. 6 is a cut-away isometric view of a suspension arrangement from a motor-driven chair according to a variant implementation of the present invention;
FIG. 7A is a view of a suspension arrangement from the view of the motor-driven chair presented in FIG. 2B;
FIG. 7B is an enlarged view of the region of FIG. 7A marked by an ellipse;
FIG. 8A is a view similar to FIG. 2B illustrating a variant implementation of a stabilizer assembly with interlocking configurations, the stabilizer assembly being shown in a deployed state;
FIG. 8B is an enlarged view of a region of FIG. 8A designated by a dashed ellipse;
FIGS. 9A and 9B are views similar to FIGS. 8A and 8B, respectively, showing the stabilizer assembly in a folded state;
FIG. 10 is a schematic isometric view of a motor-driven chair according to a further embodiment of the present invention, employing a hydraulic suspension arrangement;
FIG. 11A is a cut-away isometric view of the motor-driven chair of FIG. 10 cut along a vertical mid-plane;
FIG. 11B is an enlarged view of the region of FIG. 11A designated by an ellipse;
FIG. 12 is a partial, isometric cut-away view of a variant implementation of a motor-driven chair according to the present invention, illustrating an alternative implementation of a suspension arrangement;
FIG. 13 is a schematic isometric view of a further variant implementation of a motor-driven chair according to the present invention, illustrating an additional implementation of a suspension arrangement;
FIGS. 14A and 14B are rear isometric view of a further embodiment of a motor-driven chair, constructed and operative according to an embodiment of the present invention, shown in an open and folded state, respectively;
FIGS. 15A and 15B are front isometric views of the chair of FIG. 14A shown in a seat-raised and seat-lowered state, respectively;
FIGS. 16A-16C are side views of the chair of FIG. 14A shown in a seat-raised, a seat-lowered and a folded state, respectively;
FIG. 17A is an isometric view of the chair of FIG. 14A shown in a seat-raised state, cut away along a central plane of symmetry;
FIGS. 17B and 17C are cross-sectional views taken along a central plane of symmetry of the chair of FIG. 14A, shown in a seat-raised and seat-lowered state, respectively;
FIG. 18A is an enlarged view of the region of FIG. 17B designated by dashed line A;
FIG. 18B is a view of the region of FIG. 18A designated by dashed line B, shown after lowering of the seat and folding of a stabilizer assembly; and
FIGS. 19A-19F are a sequence of isometric views of the chair of FIG. 14A showing a sequence of folding the chair from a fully-open seat-down state to a fully folded state.

### DESCRIPTION OF THE PREFERRED EMBODIMENTS

The present invention is a motor-driven chair that is steered by rotation of the seat.

The principles and operation of motor-driven chairs according to the present invention may be better understood with reference to the drawings and the accompanying description.

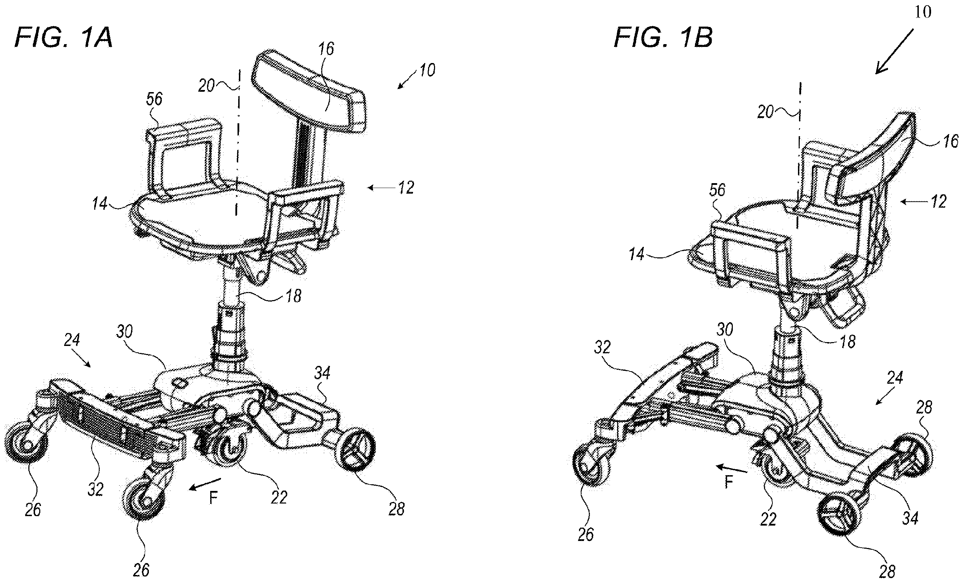

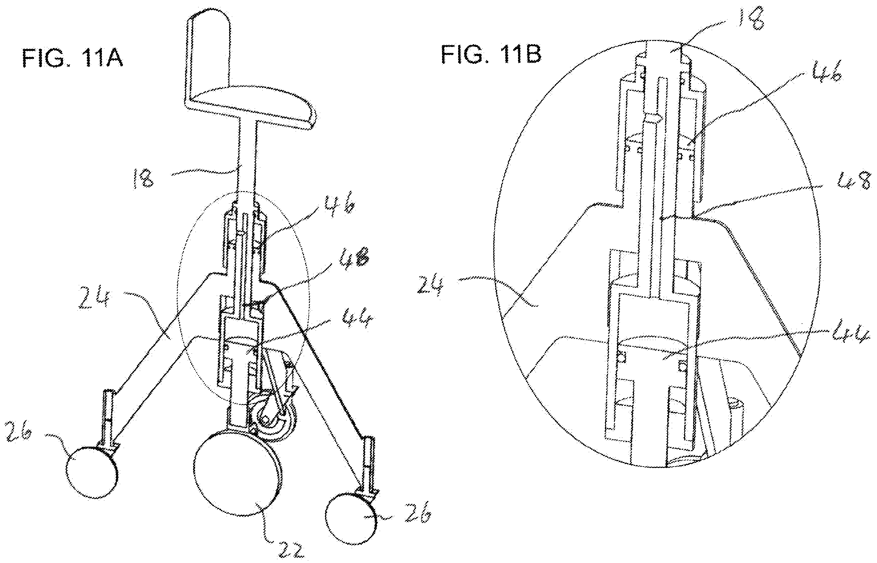

Referring now to the drawings, FIGS. 1A-13 illustrate various aspects and variants of a motor-driven chair, generally designated **10**, for propelling a user over an underlying surface. In general terms, chair **10** has a seat element **12** having support surfaces **14**, **16** for supporting the user sitting in a "seat-facing direction". A seat pole **18** extends downwards from seat element **12** for supporting the seat element. Seat pole **18** may be taken to define a vertical axis **20**. A drive wheel **22**, rotatable about a horizontal axis of rotation so as to define a direction of forward motion **F** perpendicular to the axis of rotation, is located beneath seat element **12** substantially on vertical axis **20**. Drive wheel **22** is mechanically linked to seat pole **18** so as to maintain the direction of forward motion **F** aligned with the seat-facing direction of seat element **12** so that rotation of the seat element about vertical axis **20** causes a corresponding rotation of direction of forward motion **F**.

A motor, typically implemented as a hub motor within drive wheel **22** and not shown here in detail, is in driving connection to drive wheel **22** so as to drive the drive wheel to rotate about its horizontal axis of rotation, and thereby propel the chair in the seat-facing direction. In order to maintain stability of chair **10**, a stabilizer assembly **24** is mechanically linked to seat pole **18**. Stabilizer assembly **24** includes a set of stabilizer wheels **26**, **28** mounted on a support structure, here formed from a mid-portion **30** with associated front and back frames **32** and **34**, so as to support seat pole **18** in a vertical orientation. Stabilizer assembly **24** is configured to allow rotation of seat pole **18** about vertical axis **20** relative to the support structure.

In this context, various aspects of the present invention provide a number of particularly advantageous features relating to implementation of chair **10**. Specifically, according to a first non-limiting set of particularly preferred embodiments of the present invention, chair **10** is provided with a suspension arrangement associated with seat pole **18**, drive wheel **20** and stabilizer assembly **24**, that is configured to distribute a load of a user sitting stably on seat element **12** so as to distribute the load supported by drive wheel **20** and stabilizer assembly **24** according to desired proportions. Specifically, the implementation of the suspension arrangement is preferably such that both the load on the stabilizer assembly and on the drive wheel vary in correlation to the weight supported by seat element **12**.

The significance of this feature may best be understood by contrast to certain prior devices of the central-drive-wheel, seat-steered type, such as US5183133, where a spring biases the outrigger frame downwards with a fixed force while all remaining load is applied rigidly to the drive wheel. Such a structure leads to extreme variations on the load applied to the drive wheel, which may result in loss of traction for small loads and instability of the device at high loads.

In contrast, according to a first aspect of certain particularly preferred implementations of the present invention, the suspension arrangement associated is configured to distribute a load of a user sitting stably on seat element **12** and passing downwards through with seat pole **18** so as to be distributed between drive wheel **20** and stabilizer assembly **24** according to desired proportions. Specifically, instead of the load on the stabilizer assembly **24** (or alternatively, on drive wheel **20**) being fixed, the load on each preferably increases monotonically as a function of increasing load, preferably over the entire range of normal bodyweight to which the device is intended to cater, for example, at least between 50 kg and 100 kg, and in some cases, over a range of at least 30 kg to 150 kg.

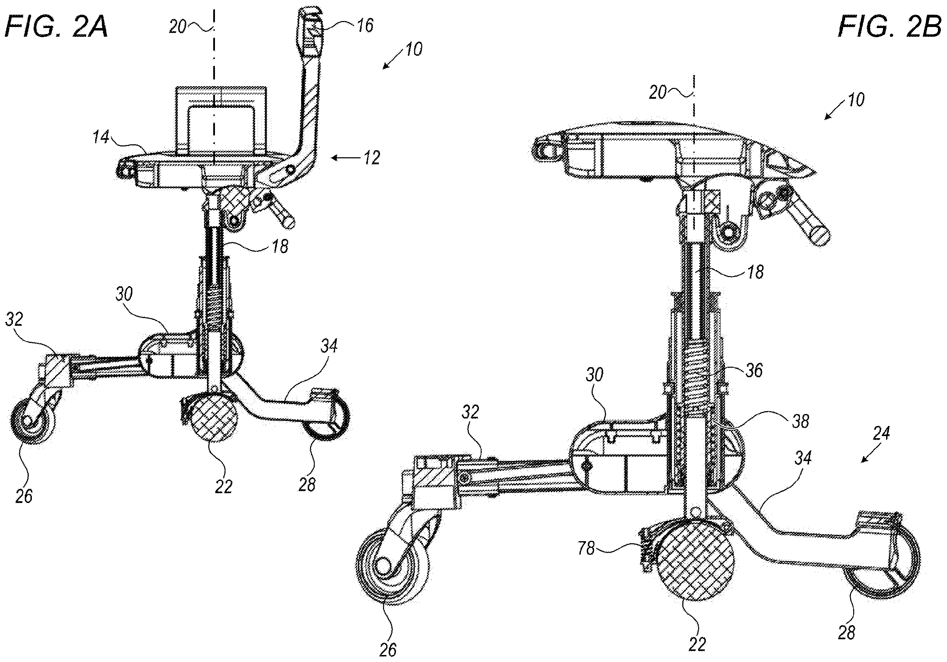

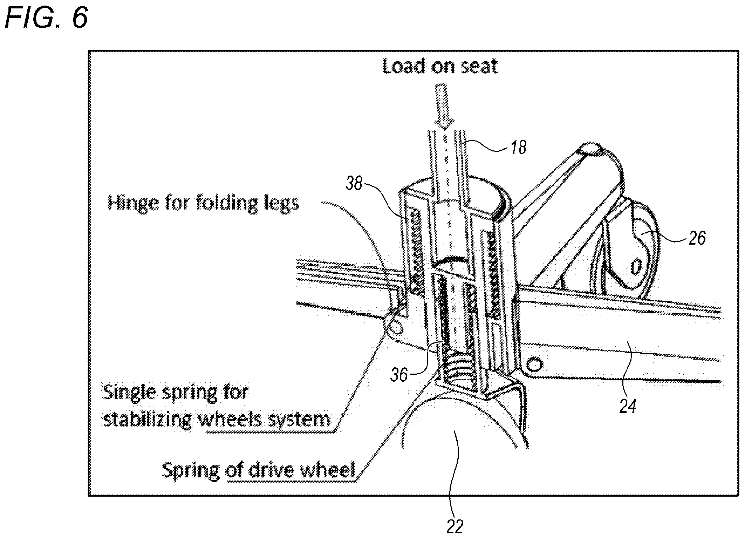

According to a first particularly preferred set of embodiments, the aforementioned suspension arrangement is implemented using a first spring arrangement to transfer load from seat pole **18** to drive wheel **20**, and a second spring arrangement to transfer load from seat pole **18** to stabilizer assembly **24**. In a first example best seen in FIG. 2B, the first spring arrangement is implemented as a first helical compression spring **36**, and the second spring arrangement is implemented as a second helical compression spring **38**. In the case illustrated here, compression spring **36** is deployed in an inner channel, while compression spring **38** is deployed in an annular channel surrounding the inner channel. Another functionally-equivalent suspension arrangement, similarly labeled, is illustrated in FIG. 6, where the components are visually clearer. (This arrangement is equivalent to that of FIG. 2B, other than that the stabilizer assembly **24** is implemented in a different manner, with radially-projecting folding arms **40** about a central portion **42**, here implemented as a cylinder, each folding arm **40** supporting a caster wheel **26b**

In the above examples, subdivision of the load on the seat between the drive wheel and the stabilizer assembly occurs based on the relative spring constants of the two spring arrangements, adjusted according to any initial offset between their respective states of loading in their starting positions (i.e., unequal preloading). In the absence of any offset, the proportions of the load transferred to the drive wheel and the stabilizer assembly remain roughly constant as the load varies. If an offset is provided, the proportions may vary, but in each case, the load on both the drive wheel and the stabilizer assembly increase monotonically as a function of increasing load, thereby maintaining the weight distribution within predefined limits that ensure reliable driving engagement with the floor and stability of the structure while in use with a wide range of user weights. In most particularly preferred implementations, the distribution of the load on the seat is maintained within the range of 30% to 90% of the user's weight on the drive wheel, with the remaining weight transferred via the stabilizer assembly.

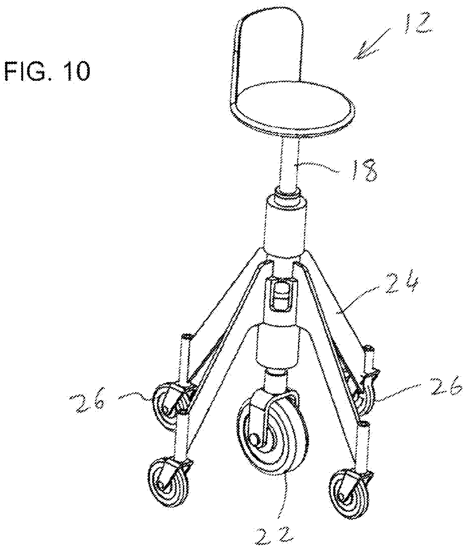

Referring now to FIGS. 10-11B, these illustrate an alternative embodiment according to an aspect of the present invention in which the suspension arrangement includes a first hydraulic arrangement, with at least one piston **44**, deployed to transfer load between seat pole **18** and drive wheel **22**, and a second hydraulic arrangement, with at least one piston **46**, deployed to transfer load between seat pole **18** and stabilizer assembly **24**. The first and second hydraulic arrangements are interconnected by a pressure-equalization line **48**. Since the pressure applied to the two pistons is equalized via line **48**, the force (load) transferred to drive wheel **22** and stabilizer assembly **24** are proportional to the surface area of the pistons, thereby subdividing the load in a predefined desired ratio, such as those discussed above.

In the particularly compact implementation illustrated here, piston **46** is implemented as an annular piston slidingly engaged around a central shaft of seat pole **18**, while pressure-equalization line **48** runs through the central shaft. Clearly, alternative implementations may be constructed employing more conventional hydraulic actuator structures, such as side-by-side cylinders/pistons, optionally with a number of small cylinders deployed around a central larger cylinder, all as will be clear to a person having ordinary skill in the art of hydraulic systems.

Furthermore, although illustrated in the context of a distinct structural embodiment, which is here illustrated only schematically, it should be noted that the hydraulic suspension arrangement option can readily be implemented also in a device which is, in all other respects, structurally similar to the embodiment of FIGS. 1-5, thus combining this feature with a range of other features of the present invention as described herein in relation to that embodiment.

The term "hydraulic" is used herein in the description and claims to refer to any system or component that is operated by fluid pressure, whether by liquid or by gas (the latter being also referred to as "pneumatic"). Thus the hydraulic implementation option described herein may be implemented using either an incompressible hydraulic fluid, such as water or oil, or a compressible fluid, such as air or another gas or gaseous mixture. In the case of a gas-filled system, it may be advantageous to provide a pre-pressurized starting pressure within the hydraulic system.

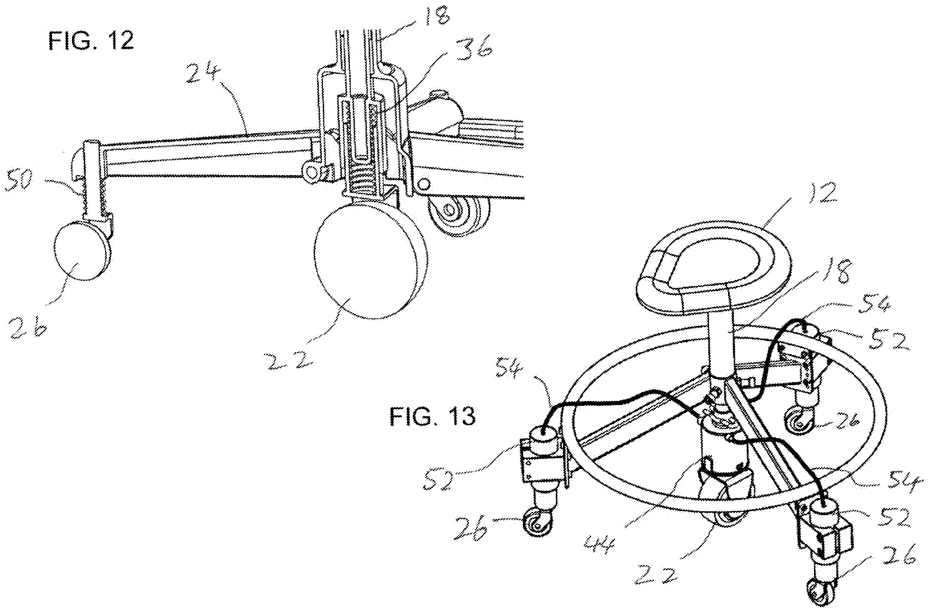

Turning now to FIGS. 12 and 13, while the implementations of the suspension arrangement described thus far distribute load centrally to stabilizer assembly **24**, it may in certain cases be preferably to provide individually responsible suspension units for each stabilizer wheel, or for subsets of the stabilizing wheels. Such options are illustrated schematically in FIGS. 12 and 13.

Specifically, FIG. 12 illustrates an implementation, generally similar to that of FIG. 6, in which elements of stabilizer assembly **24** are interconnected so as to be rotatable relative to seat pole **18** while rigidly transferring vertical load to elements of stabilizer assembly **24**. Individual spring suspension elements **50** integrated with each stabilizer wheel **26** operate in parallel with spring **36** to distribute an applied load between drive wheel **22** and the stabilizer wheels **26**.

FIG. 13 illustrates a conceptually similar hydraulic implementation in which separate hydraulic cylinders **52** are deployed to transfer load from the elements of stabilizer assembly **24** to stabilizer wheels **26**, in parallel to the central hydraulic cylinder/piston arrangement **44** which transfers load to drive wheel **22**. A set of pressure-equalization connectors, shown here schematically as tubing **54**, ensure equalization of pressure between hydraulic cylinders **52** and central hydraulic cylinder **44**. As before, the distribution of the load between the wheels is proportional to the surface area of the various pistons, thereby subdividing the load between the various wheels in a predefined ratio.

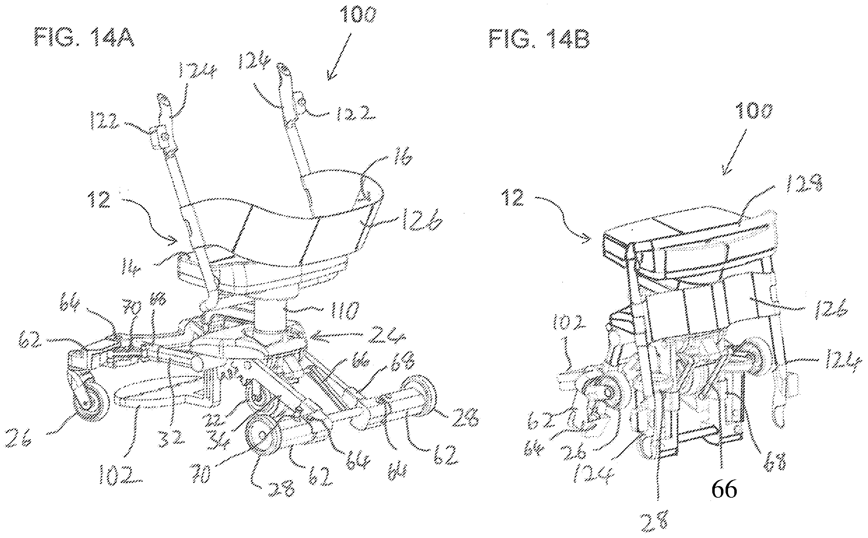

In all of the above discussions regarding implementations of the suspension arrangement, the described subdivision of load relates to distribution of a load applied vertically downwards on seat element **12** and passing axially downwards along seat pole **18**. This is typically the case for a user sitting stably on seat element **12**, where the user's center of gravity typically lies within the area of the seat, which is typically within about 30 cm from vertical axis **20**, and therefore acts primarily downwards. Clearly, during mounting and alighting to and from chair **10**, or under conditions of externally applied forces, the normal distribution of load may be momentarily disrupted. Additional preferred features relating to stability of the device during mounting and alighting will be described below with reference to the embodiment of FIGS. 14A-19F.

Turning now to a further aspect of certain particularly preferred implementations of the present invention, the present invention provides a motor-driven chair that is steered by rotation of the seat, so that the forward direction **F** of drive wheel **22** is always aligned with the forward direction of seat element **12**, and the user changes direction by turning her seat to face the direction towards which she wishes to move. Devices of this type have hitherto been designed with an "outrigger" or stabilizer structure which is omnidirectional, meaning that the user can turn towards any arbitrary direction and start moving in a straight line in that direction, and a set of caster wheels around the stabilizer structure will immediately align with the new direction.

Although providing very high mobility, the use of an omnidirectional stabilizer structure has been found to present certain problems. Specifically, in order to change the direction of the seat, and hence of drive wheel **22**, the user must apply a considerable turning moment about vertical axis **20** to overcome friction between drive wheel **22** and the underlying surface. This turning moment is preferably achieved by the user applying a lateral force with her feet against the stabilizer structure. It has been found, however, that such lateral force can sometimes have the undesired effect of rotating the stabilizing structure about the drive wheel rather than turning the drive wheel.

To address this problem, certain particularly preferred implementations of the present invention, such as that illustrated in FIGS. 1A-5, employ a combination of at least one fixed-axis follower wheel **28** and at least one caster wheel **26** mounted so as to swivel to accommodate turning of the chair. In the particularly preferred implementation shown here, chair **10** has at least two fixed-axis follower wheels **28**, here carried by a rear frame **34**, and at least two caster wheels **26**, here carried by a front frame **32**. Fixed-axis follower wheels **24** are inherently unable to align in a tangential direction relative to seat pole **18**, and are therefore highly effective at preventing rotation of the stabilizing structure about the drive wheel. As a result, a turning moment applied by the user's foot against the stabilizer structure reliably achieves the desired result of turning the seat and the drive wheel.

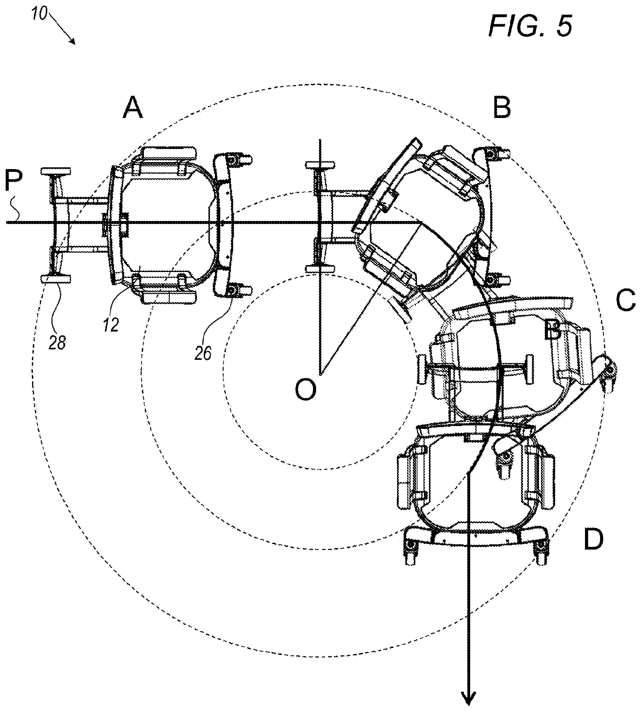

The motion resulting from this configuration is illustrated schematically in FIG. 5, where a solid line **P** marks the path of the central axis **20** during turning. At position **A**, motorized chair has the seat aligned for traveling in a straight line from left to right as shown. At position **B**, the user has chosen to turn to her right, by applying leftward force with her foot to the front frame **32** so as to turn the seat, and hence also the forward direction of the drive wheel, to the right. Since fixed-axis wheels **28** now do not face in the same direction as the seat, and cannot advance in the new forward direction of the drive wheel, wheels **28** trace circular paths as they follow the laterally advancing drive wheel. As a result, as motion continues, the fixed-axis follower wheels **28** on rear frame **34** track around circular paths about a center of turning **O** defined the intersection of the rotation axis directions of the drive wheel and the fixed-axis wheels. The caster wheels **26** also align themselves with their corresponding circular paths, each according to its distance from center **O**. This circular motion will continue (e.g., through position **C**) as long as the user maintains the side-turned state of the seat. At whatever point the user chooses to return the seat to a symmetrical position relative to the front and rear frames, the fixed-axis wheels will fall into line behind the seat and resume a straight path, as from position **D** as shown. Although shown here schematically as abrupt changes of seat direction occurring at positions **B** and **D**, the steering adjustments will in most cases be implemented smoothly, resulting in smoother changes in direction. However the operating principles remain the same.

Turning now to a further aspect of the present invention, it is a preferred feature of certain embodiments of the present invention that motorized chair **10** is implemented so as to be foldable for convenient transportation and storage. Specifically, the seat-rotation-steered structure of the present invention leads to what is in essence a single-column structure, where the load on the seat is transferred via a single seat pole **18**, rendering the core of the support structure relatively compact. However, in order to render chair **10** stable under normal conditions of usage, it is necessary to provide a considerable spread between the various stabilizer wheels **24**, **26**. Certain preferred embodiments of the present invention provide simple and effective folding mechanisms which render the device easy to fold and open, and provide a compact form for easy transportation and storage.

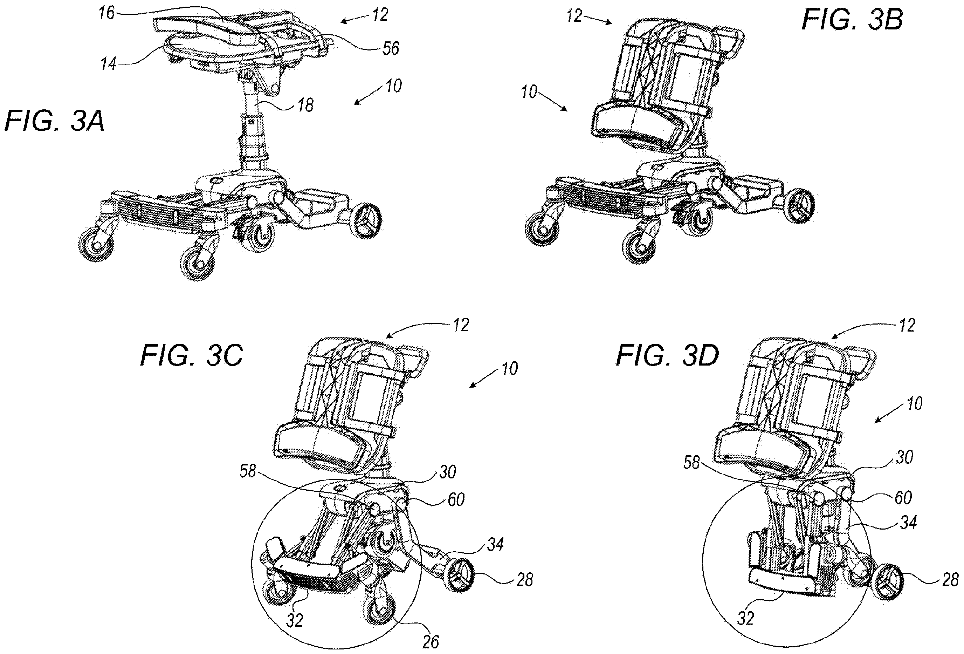

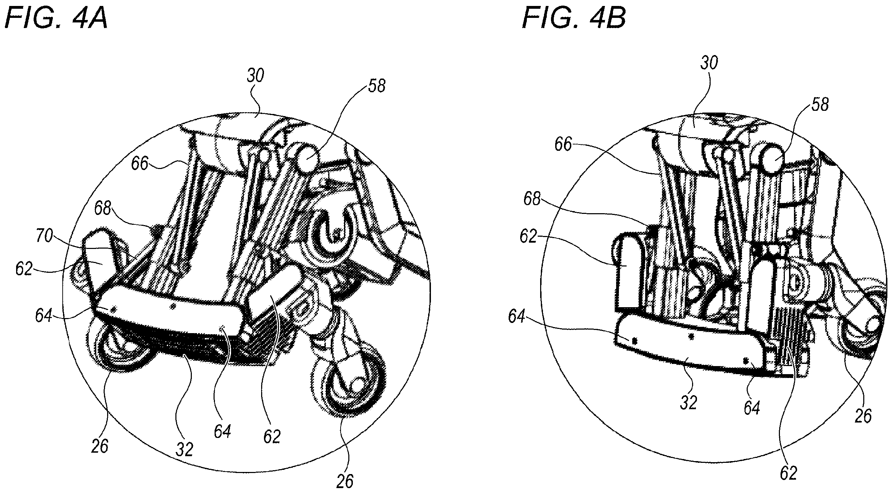

Various aspects of a folding mechanism according to one preferred implementation of the present invention are illustrated in the folding sequence of FIGS. 3A-3D and enlarged views FIGS. 4A-4B. Firstly, seat element **12** is first preferably foldable, such as by folding down rear support surface **16** and, where present, arm rests **56**, against support surface **14** (FIG. 3A), and then preferably pivoting the entire seat element **12** to as to tip into close relation to seat pole **18** (FIG. 3B).

Folding of the support structure (stabilizer assembly **24**) is here achieved by providing a center portion **30** mechanically linked to seat pole **18**, a front portion (frame **32**) hingedly connected to center portion **30** at a first hinge axis **58** and supporting two front stabilizer wheels **26**, and a rear portion (frame **34**) hingedly connected to center portion **30** at a second hinge axis **60** and supporting two rear stabilizer wheels **28**. First and second hinge axes **58** and **60** are preferably parallel axes, thereby facilitating folding of the front and rear frames **32** and **34** into close proximity.

According to a further preferred feature illustrated here, caster wheels **26** are mounted to front frame **32** via folding wings **62** foldable along a secondary hinge axis **64** that is most preferably non-parallel to hinge axis **58**, and in this case, substantially perpendicular to hinge axis **58**. In order to simplify deployment and folding of wings **62**, stabilizer assembly **24** preferably includes a linkage deployed to fold wings **62** from a deployed position to a folded position (FIGS. 4A and 4B) as front frame **32** is rotated about hinge **58**. In the non-limiting example illustrated here, the linkage for each wing **62** employs a bar **66** hingedly attached to center portion **30** at an offset from hinge **58**, and linked to a slider **68** which slides along side rails of front frame **32**. A linking rod **70** is linked via pivotal connections to slider **68** and wing **62**. As a result of this structure, angular rotation of front frame **32** from its fully-raised operation position downwards towards its folded position causes bars **66** to draw sliders **68** along the side rails of front frame **32** in the direction of hinge **58**, thereby also pulling on linking rods **70** so as to fold inwards wings **62** to the folded position of FIG. 4B. Conversely, on opening of front frame **32** to its deployed state, the motion is reversed and wings **62** are pushed outwards to their deployed state, ready for use. This mechanism thus provides an enhanced lateral wheelbase for stabilizer assembly **24** while achieving a highly compact folded state.

In the example illustrated here, the folding wings feature is employed only in front frame **32** while rear frame **34** has a fixed geometry. A variant implementation illustrated below (see FIGS. 14A-19F) employs folding wings **62** on both the front and rear frames.

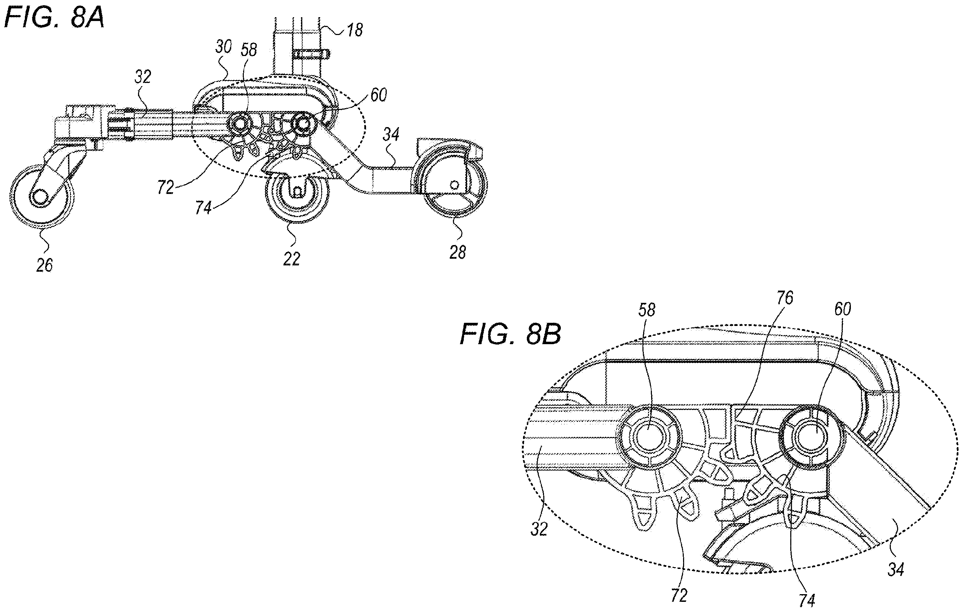

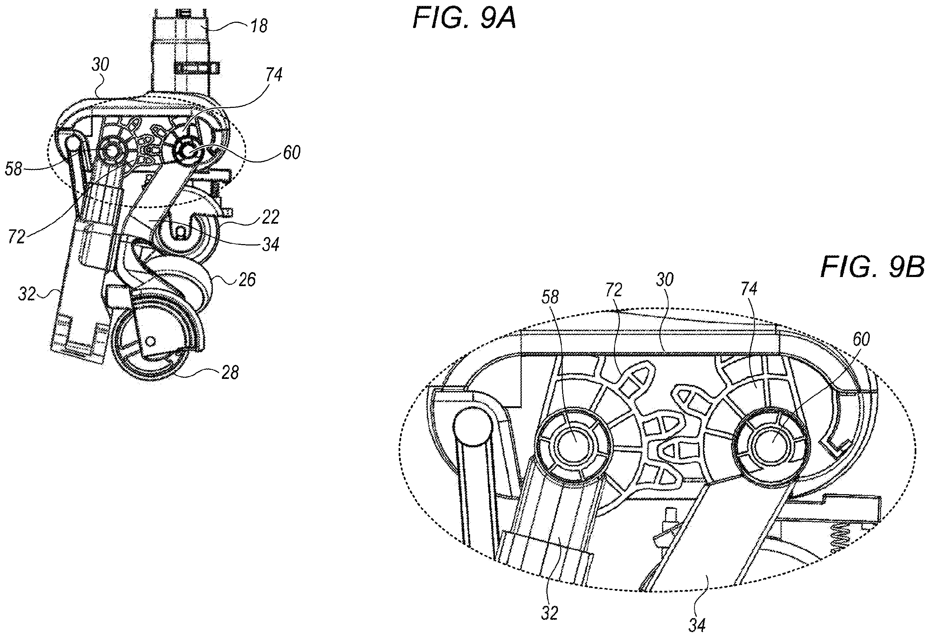

FIGS. 8A-9B illustrate a further option according to which a mechanical linkage coordinates folding of front and rear frames **32** and **34**. In the example illustrated here, each frame is provided with a partial gear wheel configuration **72** and **74**, which are centered on the respective axes **58** and **60**, and which inter-engage to ensure equal and opposite rotation of the two frames between their deployed state (FIGS. 8A and 8B) and their fully folded state (FIGS. 9A and 9B). The gear wheel configurations as shown also include abutment surfaces **76** which delimit the fully raised deployed position of the frames. The partial gear wheel form of engagement is one of a number of different forms of mechanical linkage which can be used to coordinate folding of the front and back frames, with a range of additional options being within the abilities of a person of ordinary skill in the art.

Turning now to the remaining features of motorized chair **10**, the device also includes a mobile power source, typically in the form of one or more rechargeable electrical batteries, which may advantageously be housed in a volume beneath seat support surface **14b** or alternatively within central portion **30** of stabilizer assembly **24**. A forward/reverse speed control input (not shown) is provided to the user, typically either integrated with an arm rest **56** or as a separate hand-held controller, which may be connected via a cable to the side of the seat. Wiring between the battery, the controller and the drive motor typically passes along a cable channel which passes through seat pole **18**. For certain applications, simple electric control of current to the motor is sufficient for a practical application. Optionally, an electronic controller with various additional functionality may be used, providing for example, monitoring of battery charge status and battery health, monitoring and limiting speed of motion and/or load on the motor. Implementation of all such options is a routine task for a person having ordinary skill in the art, and for conciseness, these details will not be further discussed here.

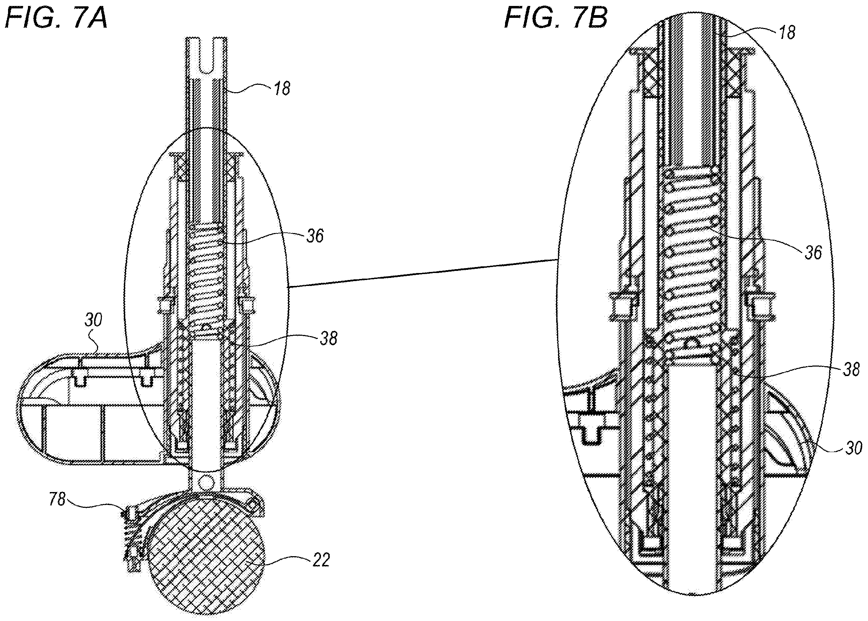

Most preferably, a brake configuration is provided on one or more of the wheels of the device to provide stability and safety while the device is stopped, and particularly during mounting and dismounting. As best seen in FIGS. 2B and 7A, the implementation illustrated here provides a mechanical brake configuration **78**, typically a friction brake, which acts on drive wheel **22**. The brake is preferably operated manually via an actuator cable (not shown) which passes upwards to a handle (not shown) at the side of the seat. Alternatively, a footoperated brake may be provided, either on the drive wheel or on one or more of the stabilizer wheels.

In particularly preferred implementations of the present invention (all embodiments), the chair is configured to have a folded size and weight that are suitable to render it portable. In certain particularly preferred implementations, the overall weight of the chair is no more than about 15 kg, and most preferably no more than about 12 kg, thereby rendering the chair readily portable. The folded form preferably has a largest dimension no more than 1 meter, and preferably no more than about 80 cm, and preferably has at least one dimension less than about 50 cm.

Turning now to FIGS. 14A-19F, there is shown a further particularly preferred implementation of a chair **100**, constructed and operative according to the teachings of the present invention. In general terms, chair **100** is similar to that of FIGS. 1A-5 in both structure and function, and analogous features are labeled similarly. Thus, here too, chair **100** has a seat element **12** having support surfaces **14**, **16** for supporting the user sitting in a "seat-facing direction", and a seat pole **18** extending downwards from seat element **12** for supporting the seat element and defining a vertical axis **20**. A drive wheel **22** defining a direction of forward motion **F** perpendicular to its axis of rotation is located beneath seat element **12** substantially on vertical axis **20**. Drive wheel **22** is mechanically linked to seat pole **18** so that rotation of the seat element about vertical axis **20** causes a corresponding rotation of direction of forward motion **F**.

"Substantially on the axis" in this context refers to a position of the wheel which is sufficiently "on axis" to facilitate steering of the wheel direction by rotation about the axis without enough frictional resistance to make it difficult for the user to turn the seat. This may be achieved using a single central wheel as shown or a pair of wheels near the axis. A larger spacing between two wheels may be accommodated where the drive wheels are driven via a differential gear, or by using two independently driven drive wheels which have relatively low resistance to rolling when not powered. These latter options however are considered unnecessarily bulky and complex for particularly preferred implementations.

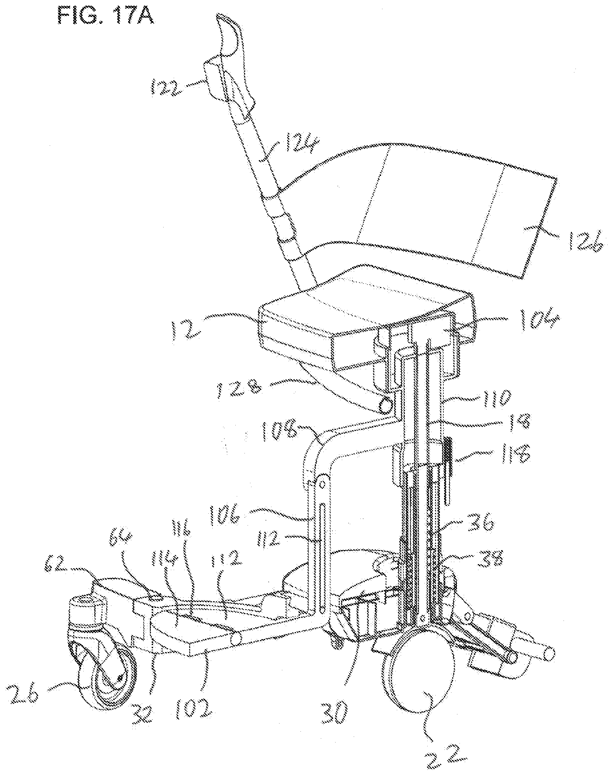

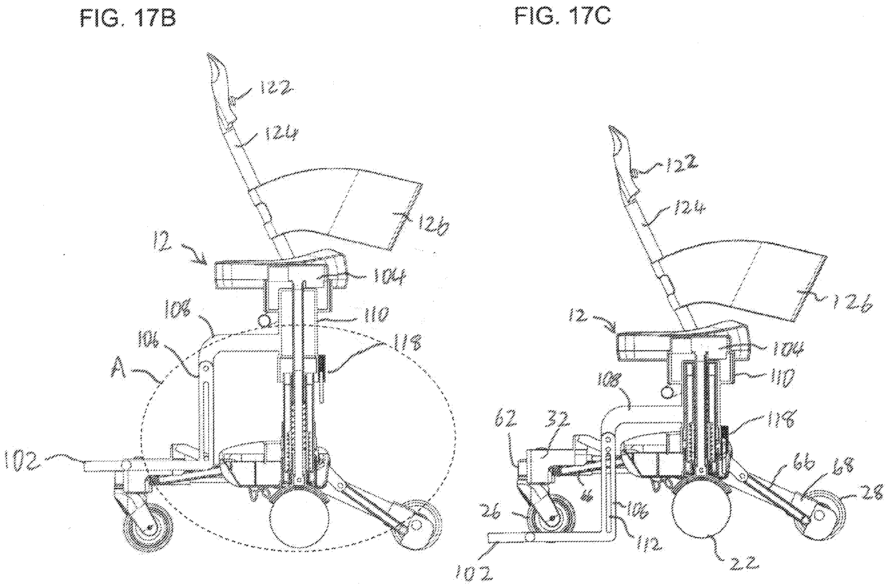

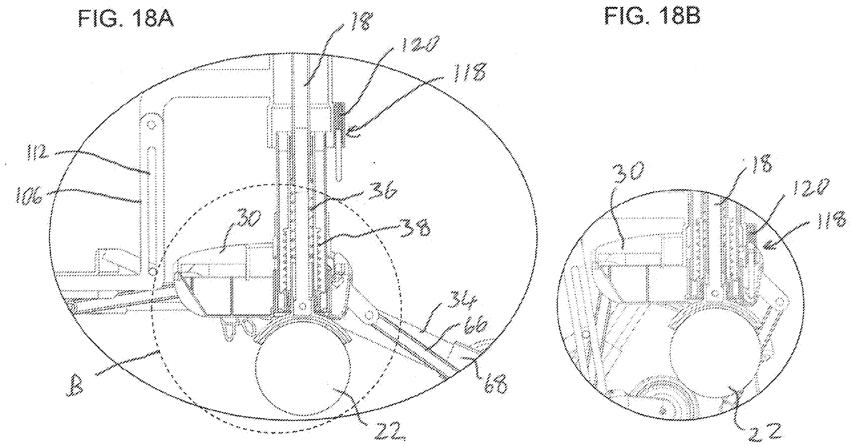

The implementation of FIGS. 14A-19F also includes a suspension arrangement similar to that of FIGS. 1A-5. As best seen in FIGS. 17A-17C and 18A, the suspension arrangement is implemented using a first spring arrangement (e.g., first helical compression spring **36**) to transfer load from seat pole **18** to drive wheel **20**, and a second spring arrangement (e.g., second helical compression spring **38**) to transfer load from seat pole **18** to stabilizer assembly **24**. The suspension arrangement is not illustrated here in detail, but will be fully understood by reference to the suspension arrangement of FIGS. 1A-5 discussed above, and can also be implemented using the various other spring-based or hydraulic options described above.

The stabilizer assembly **24** here too preferably employs a combination of castor wheels **26** and fixed-axis wheels **28**, with a deployed configuration and functionality analogous to that described above. Folding of the stabilizer assembly **24** is achieved here also by providing a center portion **30** mechanically linked to seat pole **18**, a front portion (frame **32**) hingedly connected to center portion **30** at a first hinge axis **58** and supporting two front stabilizer wheels **26**, and a rear portion (frame **34**) hingedly connected to center portion **30** at a second hinge axis **60** and supporting two rear stabilizer wheels **28**. First and second hinge axes **58** and **60** are preferably parallel axes, thereby facilitating folding of the front and rear frames **32** and **34** into close proximity.

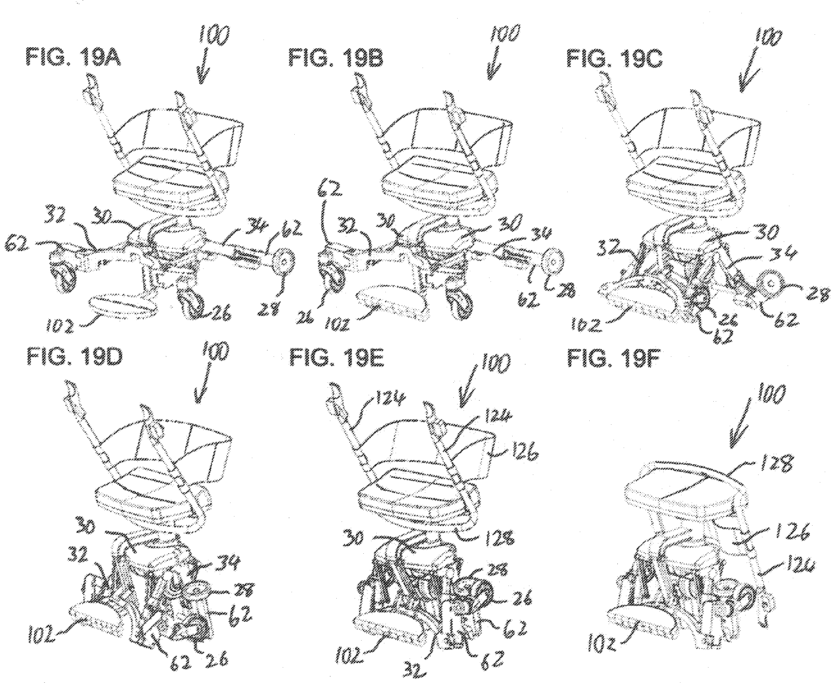

Caster wheels **26** are mounted to front frame **32** via folding wings **62** foldable along a secondary hinge axis **64** that is most preferably non-parallel to hinge axis **58**, and in this case, substantially perpendicular to hinge axis **58**. Similarly, fixed-axis wheels **28** are here mounted to rear frame **34** via folding wings **62** foldable along a secondary hinge axis **64** that is most preferably non-parallel to hinge axis **60**, and in this case, substantially perpendicular to hinge axis **60**. In order to simplify deployment and folding of wings **62**, stabilizer assembly **24** preferably includes a linkage deployed to fold wings **62** from a deployed position to a folded position (FIGS. 19B-19E) as front frame **32** and rear frame **34** are rotated about their respective hinges **58**. In the non-limiting example illustrated here, the linkage for each wing **62** employs a bar **66** hingedly attached to center portion **30** at an offset from the respective hinge **58** or **60**, and linked to a slider **68** which slides along side rails of front or rear frame **32** or **34**, respectively. A linking rod **70** is linked via pivotal connections to slider **68** and wing **62**. As a result of this structure, angular rotation of front frame **32** and rear frame **34** from their fully-raised operation positions downwards towards their folded positions causes bars **66** to draw sliders **68** along the side rails of frames in the direction of the hinges, thereby also pulling on linking rods **70** so as to fold inwards wings **62** to the folded position of FIG. 19E. Conversely, on opening of the front and rear frames **32** and **34** to their deployed states, the motion is reversed and wings **62** are pushed outwards to their deployed state, ready for use. This mechanism thus provides an enhanced lateral wheelbase for stabilizer assembly **24** while achieving a highly compact folded state.

This implementation also features a mechanical linkage to coordinate folding of front and rear frames **32** and **34**, again implemented according to a non-limiting example using partial gear wheel configuration **72** and **74**, centered on the respective axes **58** and **60**, which inter-engage to ensure simultaneous opposite rotation of the two frames between their deployed state and their fully folded state (FIGS. 19B-19E). Here too, the gear wheel configurations may include abutment surfaces which delimit the fully raised deployed position of the frames.

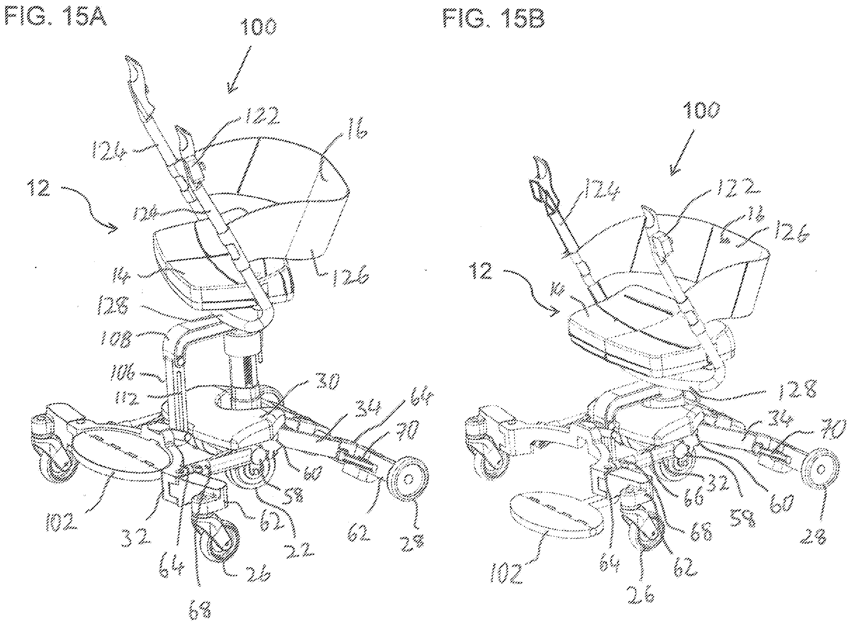

Chair **100** as illustrated here includes a number of distinctive features which are believed to provide additional advantages over chair **10** described above in a number of ways. Firstly, it has been found valuable to provide a height adjustment mechanism which facilitates mounting of chair **100** by the user. In particular, according to one particularly preferred feature of chair **100**, a footrest **102** is mechanically linked to a height adjustment mechanism so as to be selectively lowered into contact with an underlying surface (FIGS. 14A and 15B). Contact between footrest **102** and the underlying surface ensures that the chair is stable while the user puts his weight on the footrest while mounting the chair. The footrest is then raised away from the underlying surface by the height adjustment mechanism in order to provide a required clearance from the floor before the user begins to travel (FIG. 15A). Prior to dismounting, the footrest is again lowered to the ground, thereby ensuring stability also during dismounting.

While the aforementioned footrest adjustment can be provided independent of the other elements of the chair, it is believed to be preferable that the height difference between footrest **102** and seat support surface **14** be maintained constant, to provide a stable and comfortable sitting configuration for the user. For this reason, it is typically considered preferable that the height adjustment mechanism is integrated with seat pole **18** and is deployed to adjust a height of the seat element above the underlying surface between a lowered position for mounting and dismounting and a raised position for driving. In this case, footrest **102** is preferably mechanically linked to the height adjustment mechanism so as to move vertically with seat element **12** while the seat element remains rotatable about the vertical axis independent of the footrest. Most preferably, footrest **102** when raised engages complementary features of the stabilizer assembly so as to help ensure that the footrest does not swivel about the vertical axis. Additionally, according to certain particularly preferred implementations, the surface of footrest **102** in the raised position lies roughly level with upper surfaces of the front portion **32** of the stabilizer assembly, thereby providing a combined upper surface against which the feet of the user can bear while steering the chair.

A non-limiting exemplary implementation of a height adjustment mechanism is illustrated schematically in the cut-away and cross-sectional views of FIGS. 17A-17C. Specifically, in this example, the core of seat pole **18** is implemented as the shaft of a linear actuator, typically with a drive motor and transmission unit **104** fastened on the inside of a cavity within seat support surface **14**. The linear actuator may be any type of linear actuator rated for lifting an appropriate range of loads over an appropriate range of motion, including but not limited to, threaded-rod actuators and hydraulic actuators. For a wide range of applications, an actuator rated for loads of up to about 1500N and with a range of travel of about 10 cm may be suitable. Such actuators are readily available commercially from many sources, and are therefore not described here in detail. The actuator is preferably chosen to provide end linkages which are non-rotatable, thereby helping to maintain the angular alignment of the seat and the drive wheel, as above. The bottom end of the actuator preferably bears on the suspension arrangement through which the seat load is distributed between the drive wheel and the stabilizer arrangement, all as already described above.

Parenthetically, although the footrest of chair **100** is believed to be particularly advantageous, the previous embodiments of chair **10** may also optionally be enhanced by providing a height adjustment mechanism for the seat element **12**, even where no adjustable footrest is provided. In the latter case, the lowered position of the seat is used to facilitate mounting and dismounting while the user has her feet on the floor, and the user's feet are then transferred to the stabilizer assembly before, during or after raising of the seat, ready for driving.

Where a height adjustment mechanism is provided, the chair is preferably operated by an electronic control system which includes logic circuitry and/or a processing system configured by appropriate hardware configuration and/or software to ensure appropriate sequencing of operations. For example, actuating the drive wheel to travel forwards or backwards is disabled while the seat is in the lowered state. Optionally, a user input to drive the chair may automatically be translated into a "raise-seat" command, in preparation for driving. Conversely, lowering of the seat may advantageously be disabled while the chair is moving, but may occur automatically on actuation of an "off" command, prior to powering-down of the controller. As before, the control system may be physically housed within the seat internal volume, in the housing of the central portion of the stabilizer assembly, or anywhere else within the chair assembly, either as a single unit or as a number of distributed components.

Inputs to the control system are preferably provided via a manually operated lever or rocker-switch **122** and/or various other buttons or other inputs, preferably deployed on one or both chair handles **124**. The inputs are typically connected to the control system via wires which pass within the handles, although wireless connections are also possible, as is known in the art of low-power wireless input devices.

Turning now in more detail to the particularly preferred but non-limiting exemplary implementation of chair **100** illustrated here, footrest **102** is here supported on a bracket **106** which is hinged to a support arm **108** which projects from an upper-column housing **110**. Seat element **12** and the drive motor and transmission unit **104** of the linear actuator are linked to upper-column housing **110** so as to move vertically as a unit while allowing rotation of the seat-actuator assembly relative to the upper-column housing **110**.

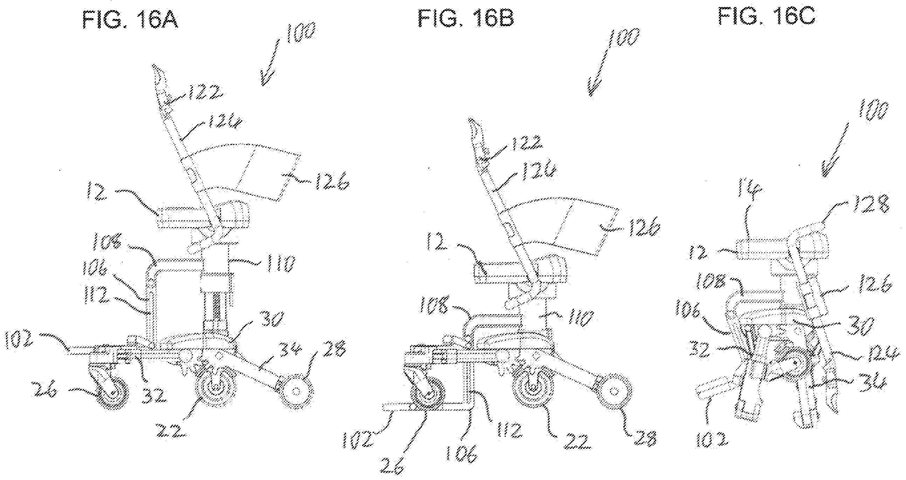

Bracket **106** is formed here with a slot **112** within which is engaged a pin of stabilizer assembly **24**. The pin-in-slot engagement is preferably configured such that, in the raised position of the seat and footrest, the pin is sufficiently near to the bottom of the slot that it prevents downward folding of the front frame **32**, thereby preventing folding of the device when the seat is raised. When the seat is lowered, the pin sits higher in slot **112** as seen in FIG. 16B. In this position, the folding motion of the stabilizer assembly is allowed, and the pin-in-slot engagement additionally guides pivoting of bracket **106** about its hinge to a more compact inward-folded position as shown in FIG. 16C.

According to another particularly preferred but non-limiting feature of footrest **102**, the footrest has a foot support surface including a rear portion **112** proximal to the seat element and a front portion **114** projecting away from the seat element **14**. Front portion **114** and rear portion **112** are connected at a hinged connection **116** so as to allow folding inwards of front portion **114** of the foot support surface (see FIG. 19B). This folding motion renders the footrest more compact for the folded state of chair **100**. In certain particularly preferred cases, the folded state may also be used when the seat is raised and in use, for example, rendering it easier to approach close to a table or cupboard.

Turning now to a further particularly preferred but non-limiting feature of chair **100**, the chair as illustrated here includes a fold-assist mechanism **118** for assisting folding of stabilizer assembly **24**. As best seen in the expanded views of FIGS. 18A and 18B, fold-assist mechanism **118** is implemented here as a spring-loaded actuator associated with the height-adjustment mechanism and deployed such that lowering of the seat element from the raised position (FIG. 18A) to the lowered position (FIG. 18B) brings the actuator into engagement with a part of the stabilizer assembly, in this case, an arm of rear portion **34**, and applies loading to an internal spring **120** of the actuator. This loading is then released during at least an initial part of a folding motion of the stabilizer assembly, thereby facilitating folding of the device. The fact that loading on internal spring **120** is induced by lowering of the height-adjustment mechanism ensures that the loading occurs selectively when needed, avoiding maintaining the spring under load for extended periods during use of the device. Although illustrated here as a linear actuator biased by a helical spring, it will be clear to a person having ordinary skill in the art that a wide range of other actuator configurations and types of spring may be used, including but not limited to, helical springs, leaf springs and air compression springs.

The handles **124** of chair **100** are preferably also implemented as folding handles. In the implementation illustrated here, the handles are pivotally connected to the seat element **12** at the sides of the chair, and fold through a rearward pivotal motion. Optionally, the handles are integrated as shown via a crossbar **128** passing beneath the seat in the deployed state, which rests against the central column of the chair in order to firmly support the handles. The shape of the crossbar and the position of the pivotal connections is chosen to allow the bar to pass around the front of the seat so that the handles can fold backwards. The back support surface **16** is here preferably provided by a flexible element (a broad strap or the like) which bends around the folded mechanism of the chair when folded down, as shown in FIGS. 14B, 16C and 19F.

In all other respects, chair **100** is similar to that of the previously described implementations, and subject to the same range of options and variants, and its structure and function will be fully understood by reference to the above description.

It will be appreciated that the above descriptions are intended only to serve as examples, and that many other embodiments are possible within the scope of the present invention as defined in the appended claims.

## Claims

1. A motor-driven chair (10, 100) for propelling a user over an underlying surface, the chair comprising:
(a) a seat element (12) having support surfaces (14, 16) for supporting the user sitting in a seat-facing direction;
(b) a seat pole (18) extending downwards from said seat element for supporting said seat element, said seat pole defining a vertical axis (20);
(c) a drive wheel (22) rotatable about a horizontal axis of rotation so as to define a direction of forward motion perpendicular to said axis of rotation, said drive wheel being located beneath said seat element substantially on said vertical axis, said drive wheel being mechanically linked to said seat pole so as to maintain said direction of forward motion aligned with said seat-facing direction so that rotation of said seat element about said vertical axis causes a corresponding rotation of said direction of forward motion;
(d) a motor in driving connection to said drive wheel so as to drive said drive wheel to rotate about said horizontal axis of rotation, and thereby propel the chair in the seat-facing direction;
(e) a stabilizer assembly (24) mechanically linked to said seat pole, said stabilizer assembly comprising a set of stabilizer wheels mounted on a support structure (30, 32, 34) for supporting said seat pole in a vertical orientation, said stabilizer assembly allowing rotation of said seat pole about said vertical axis relative to said support structure; and
(f) a suspension arrangement associated with said seat pole, said drive wheel and said stabilizer assembly,
**characterized in that** said suspension arrangement comprises a first suspension spring (36) deployed to transfer load between said seat pole and said drive wheel and a second suspension spring (38) deployed to transfer load between said seat pole and said support structure or said suspension arrangement comprises a first hydraulic arrangement comprising at least one piston (44), said first hydraulic arrangement being deployed to transfer load between said seat pole and said drive wheel, and a second hydraulic arrangement comprising at least one piston (46), said second hydraulic arrangement being deployed to transfer load between said seat pole and said support structure, wherein said first and second hydraulic arrangements are interconnected by a pressure-equalization line (48), thereby distributing a load of the user sitting stably on said seat element so as to maintain a predefined range of proportions between a load supported by said drive wheel and a load supported by said stabilizer wheels.

2. The chair of claim 1, wherein said suspension arrangement is configured to distribute a load of the user sitting stably on said seat element so that a substantially constant proportion of the user's weight is supported by said drive wheel and a remainder of the user's weight is supported by said stabilizer wheels for users of weight anywhere between 50 kg and 100 kg, said substantially constant proportion being between 30% and 90% of the user's weight.

3. The chair of claim 1, wherein said set of stabilizer wheels comprises at least two fixed-axis follower wheels (28) and at least two caster wheels (26) mounted so as to swivel to accommodate turning of the chair.

4. The chair of claim 1, wherein said support structure comprises a center portion (30) mechanically linked to said seat pole, a front portion (32) hingedly connected to said center portion at a first hinge axis and supporting two front wheels from said set of stabilizer wheels, and a rear portion (34) hingedly connected to said center portion at a second hinge axis and supporting two rear wheels from said set of stabilizer wheels, wherein said first and second hinge axes are parallel axes, and wherein said support structure assumes a deployed configuration in which the motor-driven chair is supported by said drive wheel and said stabilizer assembly for propelling a user over an underlying surface, and wherein said support structure is foldable about said first and second hinge axes to assume a compact folded storage state.

5. The chair of claim 4, wherein said front wheels are caster wheels (26) mounted to said front portion via folding wings (62) foldable along a secondary hinge axis non-parallel to said first hinge axis, said support structure further comprising a linkage (66) deployed to fold said wings from a deployed position to a folded position as said front portion is rotated about said first hinge.

6. The chair of any preceding claim, further comprising a height adjustment mechanism integrated with said seat pole (18) and deployed to adjust a height of said seat element (12) above the underlying surface between a lowered position for mounting and dismounting and a raised position for driving.

7. The chair of claim 6, further comprising a footrest (102) mechanically linked to said height adjustment mechanism so as to move vertically with said seat element (12) so as to be brought into contact with the underlying surface in said lowered position of said seat element and to be raised away from the underlying surface in said raised position of said seat element, said seat element being rotatable about said vertical axis independent of said footrest.

8. The chair of claim 7, wherein said stabilizer assembly is a foldable stabilizer assembly foldable from a deployed state for supporting the chair to a folded state for compact storage and transport, and wherein said footrest (102) is mechanically linked to said stabilizer assembly so as to obstruct folding of said stabilizer assembly from said deployed state to said folded state when said footrest is in said raised position.

9. The chair of claim 7, wherein said footrest (102) has foot support surface including a rear portion proximal to said seat element and a front portion projecting away from said seat element, said front portion and said rear portion being connected at a hinged connection so as to allow folding inwards of said front portion of the foot support surface.

10. The chair of claim 6 wherein said stabilizer assembly is a foldable stabilizer assembly foldable from a deployed state for supporting the chair to a folded state for compact storage and transport, the chair further comprising a fold-assist mechanism (118) for assisting folding of said stabilizer assembly, said fold-assist mechanism comprising a spring-loaded actuator associated with said height-adjustment mechanism and deployed such that lowering of said seat element from said raised position to said lowered position brings said actuator into engagement with a part of said stabilizer assembly and applies loading to an internal spring (120) of said actuator, said loading being released during at least part of a folding motion of said stabilizer assembly.

## Patentansprüche

1. Motorisierter Stuhl (10, 100) zum befördern eines Benutzers über eine darunter liegende Oberfläche, wobei der Stuhl umfasst:
(a) ein Sitzelement (12) mit Stützflächen (14, 16) zum Stützen des in einer dem Sitz zugewandten Richtung sitzenden Benutzers;
(b) eine Sitzsäule (18), die sich von dem Sitzelement nach unten erstreckt, um das Sitzelement zu stützen, wobei die Sitzstütze eine vertikale Achse (20) definiert;
(c) ein Antriebsrad (22), das um eine horizontale Drehachse drehbar ist, um eine Vorwärtsbewegungsrichtung senkrecht zu der Drehachse zu definieren, wobei das Antriebsrad unter dem Sitzelement im Wesentlichen auf der vertikalen Achse angeordnet ist, wobei das Antriebsrad mechanisch mit der Sitzsäule verbunden ist, um die Vorwärtsbewegungsrichtung mit der dem Sitz zugewandten Richtung ausgerichtet zu halten, so dass eine Drehung des Sitzelements um die vertikale Achse eine entsprechende Drehung der Vorwärtsbewegungsrichtung bewirkt;
(d) einen Motor, der in Antriebsverbindung mit dem Antriebsrad angeordnet, so dass er das Antriebsrad in Rotation um die horizontale Drehachse antreibt, wodurch der Stuhl in der dem Sitz zugewandten Richtung befördert wird;
(e) eine Stabilisatoranordnung (24), die mechanisch mit der Sitzsäule verbunden ist, wobei die Stabilisatoranordnung einen Satz von Stabilisatorrädern umfasst, die an einer Stützstruktur (30, 32, 34) montiert sind, um die Sitzsäule in einer vertikalen Ausrichtung zu stützen, wobei die Stabilisatoranordnung einer Drehung der Sitzsäule um die vertikale Achse relativ zu der Stützstruktur ermöglicht; und
(f) eine Aufhängungsanordnung, die der Sitzsäule, dem Antriebsrad und der Stabilisatoranordnung zugeordnet ist,
**dadurch gekennzeichnet, dass** die Aufhängungsanordnung eine erste Aufhängungsfeder (36) für die Übertragung einer Last zwischen der Sitzsäule und dem Antriebsrad, und eine zweite Aufhängungsfeder (38) für die Übertragung einer Last zwischen dem Säulensitz und der Stützstruktur umfasst oder die Aufhängungsanordnung eine erste Hydraulikanordnung mit mindestens einem Kolben (44), wobei die erste hydraulische Anordnung verwendet wird, um die Last zwischen der Sitzsäule und dem Antriebsrad zu übertragen, und eine zweite hydraulische Anordnung mit mindestens einem Kolben (46) umfasst, wobei die zweite hydraulische Anordnung verwendet wird, um die Last zwischen der Sitzsäule und der Stützstruktur zu übertragen, wobei die erste und die zweite hydraulische Anordnung durch eine Druckausgleichsleitung (48) miteinander verbunden sind, wodurch eine Last des stabil auf dem Sitzelement sitzenden Benutzers verteilt wird, um einen vordefinierten Bereich von Anteile zwischen einer von dem Antriebsrad gestützten Last und eine von den Stabilisatorrädern gestützten Last zu erhalten.

2. Stuhl nach Anspruch 1, wobei die Aufhängungsanordnung so konfiguriert ist, dass sie eine Last des stabil auf dem Sitzelement sitzenden Benutzers verteilt, so dass ein im Wesentlichen konstanter Anteil des Gewichts des Benutzers von dem Radantrieb gestützt wird und ein Rest des Gewichts des Benutzers von den Stabilisatorrädern für Benutzer mit einem Gewicht zwischen 50 kg und 100 kg gestützt wird, wobei der im Wesentlichen konstante Anteil zwischen 30 % und 90 % des Gewichts des Benutzers beträgt.

3. Stuhl nach Anspruch 1, wobei der Satz von Stabilisatorrädern mindestens zwei Folgeräder (28) mit feststehender Achse und mindestens zwei Lenkrollen (26), die schwenkbar angebracht sind, um sich an die Drehung des Stuhls anzupassen, umfasst.

4. Stuhl nach Anspruch 1, wobei die Stützstruktur einen Mittelabschnitt (30), der mechanisch mit der Sitzsäule verbunden ist, einen Vorderabschnitt (32), der gelenkig mit dem Mittelabschnitt an einer ersten Gelenkachse verbunden ist und zwei Vorderräder aus dem Satz von Stützrädern stützt, und einen Hinterabschnitt (34), der gelenkig mit dem Mittelabschnitt an einer zweiten Gelenkachse verbunden ist und zwei Hinterräder aus dem Satz von Stützrädern stützt, umfasst, wobei die erste und die zweite Gelenkachse parallele Achsen sind, und die Stützstruktur einer aufgestellten Konfiguration einnimmt, in der der motorisierte Stuhl von dem Antriebsrad und der Stabilisatoranordnung gestützt wird, um einen Benutzer auf eine darunter liegende Oberfläche zu befördern, und wobei die Stützstruktur um die erste und die zweite Scharnierachse faltbar ist, um einen kompakt geklappten Verstauzustand einzunehmen.

5. Stuhl nach Anspruch 4, wobei die Vorderräder Schwenkräder (26) sind, die an dem Vorderabschnitt mittels faltbarer Flügel (62) angebracht sind, die entlang einer sekundären Gelenkachse nicht-parallel zu der ersten Gelenkachse faltbar ist, wobei die Stützstruktur ferner ein Gestänge (66) zum Falten die Flügel von einer ausgefahrenen Position in eine gefaltete Position, wenn der Vorderabschnitt um den ersten Gelenk geschwenkt wird, umfasst.

6. Stuhl nach einem der vorhergehenden Ansprüche, ferner umfassend einen Höheneinstellmechanismus, der integral mit der Sitzsäule (18) ist und verwendet wird, um eine Höhe des Sitzelements (12) über der darunter liegenden Oberfläche zwischen einer abgesenkten Position zur Montage und Demontage und eine erhöhte Position für den Antrieb einzustellen.

7. Stuhl nach Anspruch 6, ferner umfassend eine Fußstütze (102), die mechanisch mit dem Höheneinstellmechanismus verbunden ist, um sich vertikal mit dem Sitzelement (12) zu bewegen, um in dem abgesenkten Position des Sitzelements in Kontakt mit der darunter liegenden Oberfläche gebracht zu werden und in der angehobenen Position des Sitzelements von der darunter liegenden Oberfläche angehoben zu werden, wobei das Sitzelement unabhängig von der Fußstütze um die vertikale Achse schwenkbar ist.

8. Stuhl nach Anspruch 7, wobei die Stabilisatoranordnung eine faltbare Stabilisatoranordnung ist, die aus einem ausgefahrenen Zustand zum Stützen des Stuhls in einen gefalteten Zustand zum kompakten Verstauen und Transportieren faltbar ist, und wobei die Fußstütze (102) mechanisch mit der Stabilisatoranordnung verbunden ist, um eine Faltung der Stabilisatoranordnung aus dem ausgefahrenen Zustand in den gefalteten Zustand zu verhindern, wenn sich die Fußstütze in der angehobenen Position befindet.

9. Stuhl nach Anspruch 7, wobei die Fußstütze (102) eine Fußstützfläche mit einen Hinterabschnitt proximal zu dem Sitzelement und einen von dem Sitzelement vorstehenden Vorderabschnitt, wobei der Vorderabschnitt und der Hinterabschnitt an einer gelenkigen Verbindung zum Ermöglichen der Faltung des Vorderabschnitts der Fußstützfläche nach innen verbunden sind.

10. Stuhl nach Anspruch 6, wobei die Stabilisatoranordnung eine faltbare Stabilisatoranordnung ist, die aus einem ausgefahrenen Zustand zum Stützen des Stuhls in einen gefalteten Zustand zum kompakten Verstauen und Transportieren faltbar ist, wobei der Stuhl ferner einen Faltungsunterstützungsmechanismus (118) zum Unterstützen der Faltung der Stabilisatoranordnung umfasst, wobei der Faltungsunterstützungsmechanismus einen federbelasteten Aktuator umfasst, der dem Höheneinstellmechanismus zugeordnet ist und so verwendet wird, dass das Absenken des Sitzelements aus der angehobenen Position in die abgesenkte Position den Aktuator in Eingriff mit einem Teil der Stabilisatoranordnung bringt und eine Last auf eine innere Feder (120) des Aktuators ausübt, wobei die Last während mindestens eines Teils einer Faltbewegung der Stabilisatoranordnung gelöst wird.

## Revendications

1. Chaise motorisée (10, 100) destiné à déplacer un utilisateur sur une surface sous-jacente, la chaise comprenant :
(a) un élément de siège (12) pourvu de surfaces de support (14, 16) destinée à supporter l'utilisateur assis dans une direction faisant face au siège ;
(b) une colonne de siège (18) qui s'étend vers le bas depuis ledit élément de siège et qui est destinée à supporter ledit élément de siège, ladite colonne de siège définissant un axe vertical (20) ;
(c) une roue motrice (22) qui peut tourner sur un axe de rotation horizontal de manière à définir un sens de mouvement vers l'avant perpendiculaire audit axe de rotation, ladite roue motrice étant située sous ledit élément de siège sensiblement sur ledit axe vertical, ladite roue motrice étant reliée mécaniquement à ladite colonne de siège de manière à maintenir ledit sens de mouvement vers l'avant aligné avec ladite direction faisant face au siège de sorte que la rotation dudit élément de siège sur ledit axe vertical induit une rotation correspondante dudit sens de mouvement vers l'avant ;
(d) un moteur en liaison d'entraînement avec ladite roue motrice de manière à entraîner ladite roue motrice en rotation sur ledit axe de rotation horizontal, ce qui déplace la chaise dans la direction faisant face au siège ;
(e) un ensemble stabilisateur (24) lié mécaniquement à ladite colonne de siège, ledit ensemble stabilisateur comprenant un ensemble de roues stabilisatrices montées sur une structure de support (30, 32, 34) pour supporter ladite colonne de siège suivant une orientation verticale, ledit ensemble stabilisateur permettant la rotation de ladite colonne de siège sur ledit axe vertical par rapport à ladite structure de support ; et
(f) un ensemble de suspension associé à ladite colonne de siège, à ladite roue motrice et audit ensemble stabilisateur,
**caractérisé en ce que** ledit ensemble de suspension comprend un premier ressort de suspension (36) utilisé de manière à transférer la charge entre ladite colonne de siège et ladite roue motrice et un deuxième ressort de suspension (38) utilisé pour transférer la charge entre ladite colonne de siège et ladite structure de support ou ledit ensemble de suspension comprend un premier ensemble hydraulique comprenant au moins un piston (44),
ledit premier ensemble hydraulique étant utilisé pour transférer la charge entre ladite colonne de siège et ladite roue motrice, et un deuxième ensemble hydraulique comprenant au moins un piston (46), ledit deuxième ensemble hydraulique étant utilisé pour transférer la charge entre ladite colonne de siège et ladite structure de support, lesdits premier et deuxième ensembles hydrauliques étant interconnectés par une conduite d'équilibrage de pression (48), ce qui répartit une charge de l'utilisateur assis de manière stable sur ledit élément de siège de manière à maintenir une plage de parts prédéfinie entre une charge supportée par ladite roue motrice et une charge supportée par lesdites roues stabilisatrices.

2. Chaise selon la revendication 1, ledit ensemble de suspension étant configuré pour répartir une charge de l'utilisateur assis de manière stable sur ledit élément de siège de sorte qu'une part sensiblement constante du poids de l'utilisateur est supportée par ladite roue motrice et un reste du poids de l'utilisateur est supporté par lesdites roues stabilisatrices pour des utilisateurs dont le poids est compris entre 50 kg et 100 kg, ladite part sensiblement constante étant comprise entre 30 % et 90 % du poids de l'utilisateur.

3. Chaise selon la revendication 1, ledit ensemble de roues stabilisatrices comprenant au moins deux roues suiveuses (28) à axe fixe et au moins deux roues pivotantes (26) montées de manière à pivoter pour s'adapter au virage pris pas la chaise.

4. Chaise selon la revendication 1, ladite structure de support comprenant une partie centrale (30) reliée mécaniquement à ladite colonne de siège, une partie avant (32) reliée de manière articulée à ladite partie centrale au niveau d'un premier axe d'articulation et supportant deux roues avant dudit ensemble de roues stabilisatrices, et une partie arrière (34) reliée de manière articulée à ladite partie centrale au niveau d'un deuxième axe d'articulation et supportant deux roues arrière dudit ensemble de roues stabilisatrices, lesdits premier et deuxième axes d'articulation étant des axes parallèles, et ladite structure de support adoptant une configuration déployée dans laquelle la chaise motorisée est supportée par ladite roue motrice et ledit ensemble stabilisateur pour déplacer un utilisateur sur une surface sous-jacente, et ladite structure de support étant pliable sur desdits premier et deuxième axes d'articulation pour prendre un état de rangement plié compact.

5. Chaise selon la revendication 4, lesdites roues avant étant des roues pivotantes (26) montées sur ladite partie avant par le biais d'ailettes pliable (62) pouvant se plier suivant un axe d'articulation secondaire non parallèle audit premier axe d'articulation, ladite structure de support comprenant en outre une tringlerie (66) utilisée pour plier lesdites ailettes d'une position déployée à une position pliée lorsque ladite partie avant est pivotée sur ladite première articulation.

6. Chaise selon l'une quelconque des revendications précédentes, comprenant en outre un mécanisme de réglage de hauteur intégré à ladite colonne de siège (18) et utilisé pour régler une hauteur dudit élément de siège (12) au-dessus de la surface sous-jacente entre une position abaissée destinée au montage et au démontage et une position relevée destinée à l'entraînement.

7. Chaise selon la revendication 6, comprenant en outre un repose-pieds (102) lié mécaniquement audit mécanisme de réglage de hauteur de manière à se déplacer verticalement avec ledit élément de siège (12) afin d'être amené en contact avec la surface sous-jacente dans ladite position abaissée dudit élément de siège et d'être relevé de la surface sous-jacente dans ladite position relevée dudit élément de siège, ledit élément de siège pouvant pivoter sur ledit axe vertical indépendamment dudit repose-pieds.

8. Chaise selon la revendication 7, ledit ensemble stabilisateur étant un ensemble stabilisateur pliant pouvant se plier d'un état déployé destiné à supporter la chaise à un état plié destiné au rangement et au transport compacts, et ledit repose-pieds (102) étant lié mécaniquement audit ensemble stabilisateur de manière à empêcher le pliage dudit ensemble stabilisateur dudit état déployé vers ledit état plié lorsque ledit repose-pieds est dans ladite position relevée.

9. Chaise selon la revendication 7, ledit repose-pieds (102) comportant une surface de support de pied comprenant une partie arrière proximale audit élément de siège et une partie avant se projetant depuis ledit élément de siège, ladite partie avant et ladite partie arrière étant reliées au niveau d'une liaison articulée pour pouvoir se plier vers l'intérieur de ladite partie avant de la surface de support de pied.

10. Chaise selon la revendication 6, ledit ensemble stabilisateur étant un ensemble stabilisateur pliable pouvant se plier d'un état déployé destiné à supporter la chaise à un état plié destiné au rangement et au transport compacts, la chaise comprenant en outre un mécanisme d'assistance de pliage (118) destiné à assister le pliage dudit ensemble stabilisateur, ledit mécanisme d'assistance de pliage comprenant un actionneur à ressort associé audit mécanisme de réglage de hauteur et utilisé de telle sorte que l'abaissement dudit élément de siège de ladite position relevée à ladite position abaissée amène ledit actionneur en engagement avec une partie dudit ensemble stabilisateur et applique une charge à un ressort intérieur (120) dudit actionneur, ladite charge étant relâchée pendant au moins une partie d'un mouvement de pliage dudit ensemble stabilisateur.
